# FASCICULE DE BREVET EUROPEEN

(11) **EP 2 147 198 B1**
(45) Date de publication et mention de la délivrance du brevet: **26.10.2011**
(21) Numéro de dépôt: 08805702.1
(22) Date de dépôt: 24.04.2008
(51) Int. Cl.: F01N 3/20, F01N 5/02

(54) **PROCEDE ET DISPOSITIF DE DECONGELATION D'UN ADDITIF DE TRAITEMENT DES GAZ D'ECHAPPEMENT**
VERFAHREN UND VORRICHTUNG ZUR ENTFROSTUNG EINES ABGASBEARBEITUNGSZUSATZES
METHOD AND DEVICE FOR DEFROSTING AN EXHAUST GAS TREATMENT ADDITIVE

(30) Priorité: 22.05.2007 FR 0755184
(43) Date de publication de la demande: 27.01.2010
(73) Titulaire: Peugeot Citroën Automobiles SA, 78140 Vélizy-Villacoublay (FR)
(72) Inventeur: SEDILOT, Xavier, 75015 Paris (FR)
(74) Mandataire: Ménès, Catherine
(86) Numéro de dépôt international: PCT/FR2008/050748
(87) Numéro de publication internationale: WO 2008/152261

(56) Documents cités:
- EP-A- 1 712 754
- WO-A-01/38704
- WO-A-2006/087541
- JP-A- 2006 083 742
- US-A1- 2003 101 715

## Description

La présente invention concerne un procédé de décongélation d'un additif destiné à traiter des gaz d'échappement d'un véhicule à moteur thermique. Elle concerne également un dispositif de décongélation pour la mise en oeuvre du procédé conforme à l'invention.

L'invention trouve une application particulièrement avantageuse dans le domaine de la réduction de l'émission d'oxydes d'azote par les moteurs diesel.

Une solution a été proposée pour limiter la production d'oxydes d'azote (NOx) dans les gaz d'échappement qui consiste à injecter dans la ligne d'échappement un additif constitué par une solution d'urée et d'seau déminéralisée, connue notamment sous la marque AdBlue. Les oxydes d'azote contenus dans les gaz d'échappement subissent alors un traitement par réduction catalytique sélective dite SCR (« Selective Catalytic Reduction ») au cours de laquelle ils sont transformés en azote et en eau.

L'additif est contenu dans un réservoir et son injection dans les gaz d'échappement est gérée par l'intermédiaire d'un module électronique qui, en fonction du taux de NOx présents en aval du système SCR, ajuste automatiquement la quantité d'additif à injecter de manière à optimiser la réduction des oxydes d'azote en sortie d'échappement.

Cependant, ce procédé de traitement des NOx présente l'inconvénient que l'additif gèle à partir d'une température de congélation qui est de -11 °C pour l'additif AdBlue. Il convient donc de mettre en place des moyens permettant de décongeler l'additif lorsque sa température descend au-dessous de son point de congélation.

En ce sens, une solution a été proposée dans la demande de brevet américain n° 2003/0101715 qui consiste à réchauffer l'additif le long de son trajet depuis le réservoir jusqu'à la ligne d'échappement, en établissant un contact thermique par conduction entre le conduit d'additif et le conduit de retour de carburant.

Cette solution connue n'est pourtant pas totalement satisfaisante du fait que les échanges thermiques entre le carburant revenant de moteur et l'additif ne sont pas suffisamment importants en raison notamment, d'une part, du faible couplage thermique établi entre le conduit d'additif et le conduit de carburant et, d'autre part, de la température relativement basse du carburant retourné. De plus, elle impose de fortes contraintes de réalisation puisqu'il faut pouvoir placer les deux conduits en situation de contact thermique sur pratiquement toute leur longueur. Enfin, le système décrit dans cette demande américaine ne présente aucun moyen permettant de contrôler les échanges thermiques en fonction de la température effective de l'additif.

Par ailleurs, il est connu du document WO 01/38704 un système de traitement des gaz d'échauffement par injection dans une ligne d'échappement d'un véhicule à moteur thermique d'urée stockée dans un réservoir approprié, ce réservoir étant muni de moyens de chauffage de l'urée tels par exemple une résistance chauffante. Toutefois ce document n'enseigne pas de moyens de gestion des phases de chauffage.

Aussi, un but de l'invention est de proposer un procédé de décongélation de l'additif dont l'efficacité et la simplicité de mise en oeuvre seraient beaucoup plus grandes que celles du système connu de l'art antérieur précité.

Ce but est atteint, selon l'invention, grâce à un procédé de décongélation d'un additif destiné à traiter des gaz d'échappement selon la revendication 1.

Ainsi, on comprend que le procédé conforme à l'invention revient à récupérer la chaleur des gaz d'échappement afin de réchauffer et décongeler l'additif contenu dans le réservoir, ceci avec une grande efficacité compte tenu de la température des gaz d'échappement en sortie du moteur. Par ailleurs, l'implémentation pratique de ce procédé est relativement simple puisqu'il suffit par exemple de placer en un point de la ligne d'échappement un moyen de dérivation des gaz d'échappement vers le réservoir d'additif.

L'invention permet donc de limiter considérablement l'utilisation de sources d'énergie extérieures, comme la batterie du véhicule, pour réchauffer l'additif.

Selon un premier mode de réalisation, ledit transfert d'énergie thermique est effectué par contact thermique avec ledit réservoir de gaz d'échappement prélevés sur ladite ligne d'échappement.

Selon un deuxième mode de réalisation, ledit transfert d'énergie thermique est effectué par conduction thermique entre ladite ligne d'échappement et une enceinte conductrice entourant ledit réservoir.

Si la chaleur transférée à l'additif à partir de la ligne d'échappement est insuffisante à elle seule pour décongeler l'additif, alors l'invention prévoit qu'un apport d'énergie thermique complémentaire est fourni audit réservoir par des moyens de chauffage. Ces moyens de chauffage sont, par exemple, des résistances chauffantes.

Deux modes de fonctionnement sont donc possibles.

Dans le cas où la chaleur prélevée est suffisante pour décongeler l'additif, le transfert d'énergie thermique est effectué lorsque la température de l'additif est inférieure à la température de congélation dudit additif.

Dans le cas contraire, le transfert d'énergie thermique et ledit apport d'énergie thermique complémentaire sont effectués simultanément lorsque la température de l'additif est inférieure à la température de congélation dudit additif, l'apport d'énergie complémentaire étant interrompu dès que la température de l'additif est supérieure à ladite température de congélation. On évite ainsi une consommation inutile des moyens de chauffage fournissant l'apport d'énergie thermique complémentaire.

Dans le cadre de ce deuxième mode de fonctionnement, il est prévu par l'invention que, ledit réservoir étant composé d'un réservoir principal destiné à injecter l'additif dans la ligne d'échappement et d'une réserve destinée à alimenter le réservoir principal, le transfert d'énergie thermique et les apports d'énergie thermique complémentaire au réservoir principal et à la réserve sont effectués simultanément lorsque le température de l'additif est inférieure à la température de congélation dudit additif, l'apport d'énergie complémentaire au réservoir principal étant interrompu dès que la température de l'additif est supérieure à ladite température de congélation.

De même, l'apport d'énergie complémentaire à la réserve est interrompu dès que la température de l'additif est supérieure à ladite température de congélation.

Puis, le transfert d'énergie thermique est réduit lorsque la température de l'additif dans la réserve est comprise entre ladite température de congélation et une température donnée.

Enfin, le transfert d'énergie thermique est interrompu lorsque la température de l'additif dans la réserve est supérieure à ladite température donnée.

L'invention concerne également un dispositif de décongélation d'un additif destiné à traiter des gaz d'échappement par injection de l'additif dans la ligne d'échappement d'un véhicule à moteur thermique, selon la revendication 9.

De manière à pouvoir contrôler les échanges thermiques au sein du dispositif, l'invention prévoit au moins un détecteur de température dudit additif dans le réservoir et des moyens pour piloter lesdits moyens de transfert et lesdits moyens de chauffage en fonction de la température d'additif fournie par ledit détecteur de température.

La description qui va suivre en regard des dessins annexés, donnés à titre d'exemples non limitatifs, fera bien comprendre en quoi consiste l'invention et comment elle peut être réalisée.

La figure 1 est un schéma d'un dispositif de décongélation d'additif conforme à l'invention.

La figure 2 est un diagramme d'un procédé de décongélation d'additif conforme à l'invention.

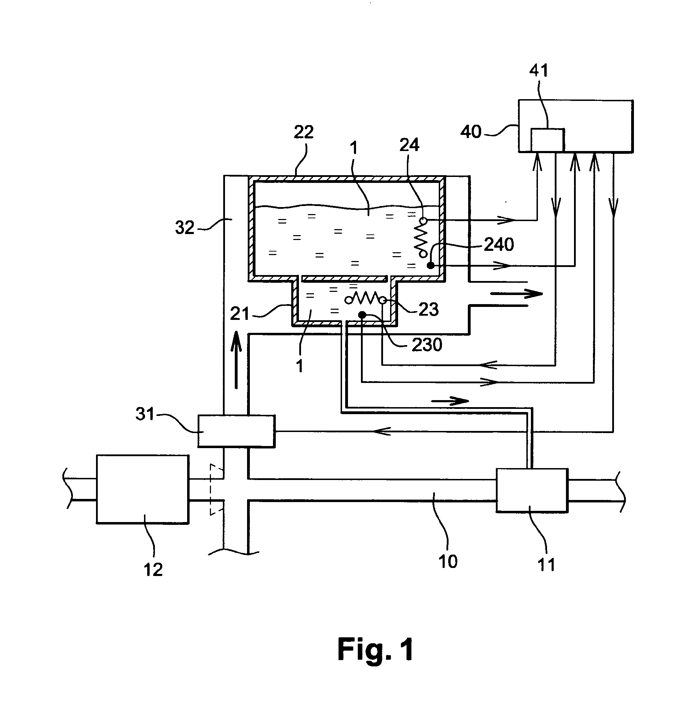

Sur la figure 1 est représenté un dispositif de décongélation d'un additif 1 destiné à traiter des gaz d'échappement d'un véhicule automobile par injection de l'additif dans la ligne 10 d'échappement du véhicule.

Comme le montre la figure 1, ce dispositif comprend un réservoir constitué en deux parties, à savoir, d'une part, un réservoir principal 21 prévu pour injecter directement l'additif 1 dans la ligne 10 d'échappement au niveau d'un système SCR 11 afin de traiter par réduction les oxydes d'azote contenus dans les gaz d'échappement, et, d'autre part, une réserve 22 pour alimenter le réservoir principal 21 au fur et à mesure de l'injection de l'additif 1 dans la ligne 10 d'échappement.

Le dispositif de la figure 1 comprend également des moyens permettant de transférer de l'énergie thermique entre la ligne 10 d'échappement et la réserve 22 et le réservoir principal 21. Dans le mode de réalisation de la figure 1, ces moyens de transfert consistent en une vanne 31 de prélèvement de gaz sur la ligne d'échappement en aval, par exemple, d'un filtre 12 à particules, et un coffrage 32 apte à mettre en contact thermique les gaz d'échappement ainsi prélevés avec la réserve 22 et le réservoir principal 21.

D'autre part, on peut observer sur la figure 1 la présence d'éléments chauffants 23, 24, tels que des résistances chauffantes, sont prévus pour fournir à l'additif 1 contenu respectivement dans le réservoir principal 21 et la réserve 22 un apport d'énergie thermique complémentaire si la quantité de chaleur apportée par les gaz d'échappement prélevés s'avérait insuffisante.

La température de l'additif contenu dans le réservoir principal 21 et dans la réserve 22 est détectée respectivement par des détecteurs 230 et 240 de température et transmise à un module électronique 40. En fonction des températures ainsi détectées, le module électronique 40 peut piloter les éléments chauffants 23, 24 au moyen d'un boîtier 41 de commande, ainsi que la vanne 31 de prélèvement.

Dans une variante, le transfert d'énergie thermique entre la ligne 10 d'échappement et le réservoir 21, 22 peut être réalisé au moyen d'un conducteur thermique, non représenté, reliant ladite ligne d'échappement à une enceinte conductrice entourant ledit réservoir.

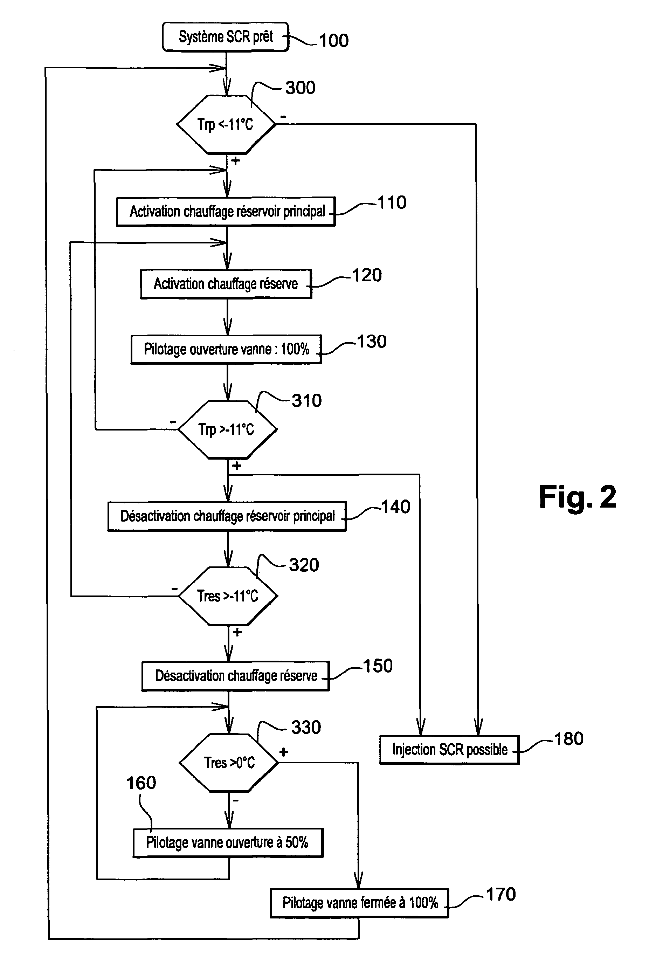

Le dispositif de la figure 1 fonctionne conformément au procédé illustré sur la figure 2.

Lorsque le système SCR 11 est prêt (100), la température Trp du réservoir principal 21 mesurée par le détecteur 230 de température est transmise au module électronique 40.

Si cette température est supérieure à la température Tc de congélation de -11 °C de l'additif 1 (300), l'injection de l'additif dans le système SCR est possible (180). Dans le cas contraire, les éléments chauffants 23 et 24 sont actionnés par le boîtier 41 de commande (110, 120) et la vanne 31 de prélèvement est complètement ouverte (130), tant que la température Trp du réservoir principal n'a pas atteint la température Tc de congélation de -11 °C (310).

Lorsque cette température est atteinte, l'injection d'additif 1 dans le système SCR est possible. Dans le même temps, les éléments chauffants 23 du réservoir principal 21 sont désactivés (140).

Si la température Tres de la réserve 22 mesurée par le détecteur 240 de température dépasse également la température Tc (320), les éléments chauffants 24 de la réserve sont également désactivés (150).

Enfin, la température Tres de la réserve 22 est comparée (330) à une température de référence donnée de 0°C par exemple par le module électronique 40. Si la température Tres est supérieure à cette température de référence, le module électronique 40 commande la fermeture complète de la vanne 31 (170), tandis que, dans le cas contraire, la fermeture n'est que partielle (160), à 50% par exemple, tant que cette température de référence n'est pas atteinte.

En conclusion, la fonction de récupération de chaleur des gaz d'échappement et la gestion par le module électronique 40 telle qu'elle vient d'être décrite présente l'avantage de réguler et d'optimiser l'énergie électrique fournie par le véhicule à travers le chauffage des éléments chauffants 23, 24.

D'autre part, la régulation en fonction de la température réalisée par le module électronique 40 conduit à une meilleure optimisation du temps normalement nécessaire à la décongélation des différentes parties du réservoir.

Enfin, le maintien à une température acceptable est possible sans avoir à piloter des éléments de chauffage grands consommateurs en énergie électrique.

## Revendications

1. Procédé de décongélation d'un additif (1) destiné à traiter des gaz d'échappement par injection de l'additif dans la ligne (10) d'échappement d'un véhicule à moteur thermique, dans lequel pour décongeler ledit additif (1) un transfert d'énergie thermique est effectué entre ladite ligne (10) d'échappement et un réservoir (21, 22) contenant ledit additif **caractérisé en ce qu'**un apport d'énergie thermique complémentaire est fourni audit réservoir (21, 22) par des moyens (23, 24) de chauffage, le transfert d'énergie thermique et ledit apport d'énergie thermique complémentaire étant effectués simultanément lorsque la température de l'additif (1) est inférieure à la température (Tc) de congélation dudit additif, l'apport d'énergie complémentaire étant interrompu dès que la température de l'additif est supérieure à ladite température de congélation.

2. Procédé selon la revendication 1, dans lequel ledit transfert d'énergie thermique est effectué par contact thermique avec ledit réservoir (21, 22) de gaz d'échappement prélevés sur ladite ligne (10) d'échappement.

3. Procédé selon la revendication 1, dans lequel ledit transfert d'énergie thermique est effectué par conduction thermique entre ladite ligne d'échappement et une enceinte conductrice entourant ledit réservoir.

4. Procédé selon la revendication 3, dans lequel le transfert d'énergie thermique est effectué lorsque la température de l'additif (1) est inférieure à la température (Tc) de congélation dudit additif.

5. Procédé selon la revendication 1, dans lequel, ledit réservoir étant composé d'un réservoir principal (21) destiné à injecter l'additif (1) dans la ligne (10) d'échappement et d'une réserve (22) destinée à alimenter le réservoir principal, le transfert d'énergie thermique et les apports d'énergie thermique complémentaire au réservoir principal (21) et à la réserve (22) sont effectués simultanément lorsque le température de l'additif (1) est inférieure à la température (Tc) de congélation dudit additif, l'apport d'énergie complémentaire au réservoir principal (21) étant interrompu dès que la température de l'additif est supérieure à ladite température de congélation.

6. Procédé selon la revendication 5, dans lequel l'apport d'énergie complémentaire à la réserve (22) est interrompu dès que la température de l'additif (1) est supérieure à ladite température de congélation.

7. Procédé selon la revendication 6, dans lequel le transfert d'énergie thermique est réduit lorsque la température de l'additif (1) dans la réserve (22) est comprise entre ladite température de congélation et une température donnée.

8. Procédé selon la revendication 7, dans lequel le transfert d'énergie thermique est interrompu lorsque la température de l'additif (1) dans la réserve (22) est supérieure à ladite température donnée.

9. Dispositif de décongélation d'un additif (1) destiné à traiter des gaz d'échappement par injection de l'additif dans la ligne (10) d'échappement d'un véhicule à moteur thermique ledit dispositif comprend des moyens (31, 32) de transfert d'énergie thermique entre ladite ligne d'échappement et un réservoir (21, 22) contenant ledit additif (1), **caractérisé en ce que** ledit réservoir (21, 22) comprend des moyens (23, 24) de chauffage destinés à fournir audit additif (1) un apport d'énergie thermique complémentaire, le transfert d'énergie thermique et ledit apport d'énergie thermique complémentaire étant effectués simultanément lorsque la température de l'additif (1) est inférieure à la température (Tc) de congélation dudit additif, l'apport d'énergie complémentaire étant interrompu dès que la température de l'additif est supérieure à ladite température de congélation.

10. Dispositif selon la revendication 9, dans lequel lesdits moyens de transfert d'énergie thermique comprennent une vanne (31) de prélèvement de gaz d'échappement sur ladite ligne (10) d'échappement et des moyens (32) pour mettre en contact thermique les gaz prélevés avec ledit réservoir (21, 22).

11. Dispositif selon la revendication 10, dans lequel lesdits moyens de transfert d'énergie thermique comprennent un conducteur thermique reliant ladite ligne d'échappement à une enceinte conductrice entourant ledit réservoir.

12. Dispositif selon la revendication 9, comprenant au moins un détecteur (230, 240) de température dudit additif (1) dans le réservoir (21, 22) et des moyens (40, 41) pour piloter lesdits moyens (31) de transfert et lesdits moyens (23, 24) de chauffage en fonction de la température d'additif (1) fournie par ledit détecteur (230, 240) de température.

13. Dispositif selon la revendication 12, dans lequel ledit réservoir comprend un réservoir principal (21) destiné à injecter l'additif (1) dans la ligne (10) d'échappement et une réserve (22) destinée à alimenter le réservoir principal, ledit réservoir principal (21) et ladite réserve (22) comportant chacun des moyens (23, 24) de chauffage et un détecteur (230, 240) de température.

## Claims

1. Method for thawing an additive (1) for treating exhaust gases by injecting the additive into the exhaust line (10) of a heat engine motor vehicle, a thermal energy transfer being carried out between said exhaust line (10) and a reservoir (21, 22) containing said additive in order to thaw said additive (1), **characterised in that** a complementary thermal energy input is provided to said reservoir (21, 22) by heating means (23, 24), the thermal energy transfer and said complementary thermal energy input being carried out simultaneously when the temperature of the additive (1) is lower than the freezing point (Tc) of said additive, the complementary energy input being interrupted as soon as the temperature of the additive is higher than said freezing point.

2. Method according to claim 1, wherein said thermal energy transfer is carried out by thermal contact between said reservoir (21, 22) and exhaust gases taken from said exhaust line (10).

3. Method according to claim 1, wherein said thermal energy transfer is carried out by thermal conduction between said exhaust line and a conductive chamber surrounding said reservoir.

4. Method according to claim 3, wherein the thermal energy transfer is carried out when the temperature of the additive (1) is lower than the freezing point (Tc) of said additive.

5. Method according to claim 1, wherein, said reservoir being made up of a main reservoir (21) for injecting the additive (1) into the exhaust line (10) and a reserve (22) for supplying the main reservoir, the thermal energy transfer and the complementary thermal energy inputs into the main reservoir (21) and into the reserve (22) are carried out simultaneously when the temperature of the additive (1) is lower than the freezing point (Tc) of said additive, the complementary energy input into the main reservoir (21) being interrupted as soon as the temperature of the additive is higher than said freezing point.

6. Method according to claim 5, wherein the complementary energy input into the reserve (22) is interrupted as soon as the temperature of the additive (1) is higher than said freezing point.

7. Method according to claim 6, wherein the thermal energy transfer is reduced when the temperature of the additive (1) in the reserve (22) is between said freezing point and a given temperature.

8. Method according to claim 7, wherein the thermal energy transfer is interrupted when the temperature of the additive (1) in the reserve (22) is higher than said given temperature.

9. Device for thawing an additive (1) for treating exhaust gases by injecting the additive into the exhaust line (10) of a heat engine motor vehicle, said device comprising means (31, 32) for transferring thermal energy between said exhaust line and a reservoir (21, 22) containing said additive (1), **characterised in that** said reservoir (21, 22) comprises heating means (23, 24) for providing said additive (1) with a complementary thermal energy input, the thermal energy transfer and said complementary thermal energy input being carried out simultaneously when the temperature of the additive (1) is lower than the freezing point (Tc) of said additive, the complementary energy input being interrupted as soon as the temperature of the additive is higher than said freezing point.

10. Device according to claim 9, wherein said thermal energy transfer means comprise a valve (31) for taking exhaust gases from said exhaust line (10) and means (32) for putting the removed gases in thermal contact with said reservoir (21, 22).

11. Device according to claim 10, wherein said thermal energy transfer means comprise a thermal conductor connecting said exhaust line to a conductive chamber surrounding said reservoir.

12. Device according to claim 9, comprising at least a temperature sensor (230, 240) for detecting the temperature of said additive (1) in the reservoir (21, 22) and means (40, 41) for controlling said transfer means (31) and said heating means (23, 24) as a function of the temperature of the additive (1) provided by said temperature sensor (230, 240).

13. Device according to claim 12, wherein said reservoir comprises a main reservoir (21) for injecting the additive (1) into the exhaust line (10) and a reserve (22) for supplying the main reservoir, said main reservoir (21) and said reserve (22) each comprising heating means (23, 24) and a temperature sensor (230, 240).

## Patentansprüche

1. Verfahren zum Auftauen eines Zusatzstoffes (1) zur Behandlung von Auspuffgasen mittels Einspritzung des Zusatzstoffes in die Auspuffanlage (10) eines Fahrzeugs mit Verbrennungsmotor, wobei zum Auftauen des Zusatzstoffes (1) eine Wärmeenergieübertragung zwischen der Auspuffanlage (10) und einem Behälter (21, 22) erfolgt, der den Zusatzstoff enthält, **dadurch gekennzeichnet, dass** dem Behälter (21, 22) über Heizmittel (23, 24) eine zusätzliche Wärmeenergiezufuhr geliefert wird, wobei die Wärmeenergieübertragung und die zusätzliche Wärmeenergiezufuhr gleichzeitig erfolgen, wenn die Temperatur des Zusatzstoffes (1) niedriger ist als die Gefriertemperatur (Tc) des Zusatzstoffes, wobei die zusätzliche Energiezufuhr unterbrochen wird, sobald die Temperatur des Zusatzstoffes höher ist als die Gefriertemperatur.

2. Verfahren nach Anspruch 1, wobei die Wärmeenergieübertragung durch thermischen Kontakt von Auspuffgasen, die von der Auspuffanlage (10) entnommen werden, mit dem Behälter (21, 22) erfolgt.

3. Verfahren nach Anspruch 1, wobei die Wärmeenergieübertragung durch Wärmeleitung zwischen der Auspuffanlage und einer leitfähigen Umwandung, die den Behälter umgibt, erfolgt.

4. Verfahren nach Anspruch 3, wobei die Wärmeenergieübertragung erfolgt, wenn die Temperatur des Zusatzstoffes (1) niedriger ist als die Gefriertemperatur (Tc) des Zusatzstoffes.

5. Verfahren nach Anspruch 1, wobei der Behälter aus einem Hauptbehälter (21), der zum Einspritzen des Zusatzstoffes (1) in die Auspuffanlage (10) bestimmt ist, und einem Reservebehälter (22) besteht, der für die Versorgung des Hauptbehälters bestimmt ist, wobei die Wärmeenergieübertragung und die zusätzliche Wärmeenergiezufuhr zum Hauptbehälter (21) und zum Reservebehälter (22) gleichzeitig erfolgen, wenn die Temperatur des Zusatzstoffes (1) niedriger ist als die Gefriertemperatur (Tc) des Zusatzstoffes, wobei die zusätzliche Energiezufuhr zum Hauptbehälter (21) unterbrochen wird, sobald die Temperatur des Zusatzstoffes höher ist als die Gefriertemperatur.

6. Verfahren nach Anspruch 5, wobei die zusätzliche Wärmeenergiezufuhr zum Reservebehälter (22) unterbrochen wird, sobald die Temperatur des Zusatzstoffes (1) höher ist als die Gefriertemperatur.

7. Verfahren nach Anspruch 6, wobei die Wärmeenergieübertragung verringert wird, sobald die Temperatur des Zusatzstoffes (1) im Reservebehälter (22) zwischen der Gefriertemperatur und einer gegebenen Temperatur liegt.

8. Verfahren nach Anspruch 7, wobei die Wärmeenergieübertragung unterbrochen wird, sobald die Temperatur des Zusatzstoffes (1) im Reservebehälter (22) höher ist als die gegebene Temperatur.

9. Vorrichtung zum Auftauen eines Zusatzstoffes (1) zur Behandlung von Auspuffgasen mittels Einspritzung des Zusatzstoffes in die Auspuffanlage (10) eines Fahrzeugs mit Verbrennungsmotor, wobei die Vorrichtung Mittel (31, 32) für eine Wärmeenergieübertragung zwischen der Auspuffanlage und einem Behälter (21, 22) umfasst, der den Zusatzstoff (1) enthält, **dadurch gekennzeichnet, dass** der Behälter (21, 22) Heizmittel (23, 24) umfasst, um dem Zusatzstoff (1) eine zusätzliche Wärmeenergiezufuhr zu liefern, wobei die Wärmeenergieübertragung und die zusätzliche Wärmeenergiezufuhr gleichzeitig erfolgen, wenn die Temperatur des Zusatzstoffes (1) niedriger ist als die Gefriertemperatur (Tc) des Zusatzstoffes, wobei die zusätzliche Energiezufuhr unterbrochen wird, sobald die Temperatur des Zusatzstoffes höher ist als die Gefriertemperatur.

10. Vorrichtung nach Anspruch 9, wobei die Mittel für die Wärmeenergieübertragung ein Ventil (31) zur Entnahme von Auspuffgasen von der Auspuffanlage (10) und Mittel (32) umfassen, um die entnommenen Gase mit dem Behälter (21, 22) in thermischen Kontakt zu bringen.

11. Vorrichtung nach Anspruch 10, wobei die Mittel für die Wärmeenergieübertragung einen Wärmeleiter umfassen, der die Auspuffanlage mit einer leitfähigen Umwandung, die den Behälter umgibt, verbindet.

12. Vorrichtung nach Anspruch 9, umfassend mindestens einen Temperatursensor (230, 240) für den Zusatzstoff (1) im Behälter (21, 22) und Mittel (40, 41), um die Mittel (31) für die Übertragung und die Heizmittel (23, 24) je nach Temperatur des Zusatzstoffes (1), die vom Temperatursensor (230, 240) bereitgestellt wird, zu steuern.

13. Vorrichtung nach Anspruch 12, wobei der Behälter einen Hauptbehälter (21), der zum Einspritzen des Zusatzstoffes (1) in die Auspuffanlage (10) bestimmt ist, und einen Reservebehälter (22) umfasst, der für die Versorgung des Hauptbehälters bestimmt ist, wobei der Hauptbehälter (21) und der Reservebehälter (22) jeweils Heizmittel (23, 24) und einen Temperatursensor (230, 240) umfassen.
